# FASCICULE DE BREVET EUROPEEN

(11) **EP 2 964 556 B1**
(45) Date de publication et mention de la délivrance du brevet: **18.09.2019**
(21) Numéro de dépôt: 14708805.8
(22) Date de dépôt: 05.03.2014
(51) Int. Cl.: B65H 29/16, B65H 5/02, B65G 21/14

(54) **DISPOSITIF DE TRANSPORT D'ELEMENTS PLATS**
TRANSPORTVORRICHTUNG FÜR EBENE ELEMENTE
DEVICE FOR TRANSPORTING FLAT ELEMENTS

(30) Priorité: 08.03.2013 EP 13001175
(43) Date de publication de la demande: 13.01.2016
(73) Titulaire: BOBST MEX SA, 1031 Mex (CH)
(72) Inventeur: STEINER, Christophe, CH-1023 Crissier (CH)
(74) Mandataire: Wagner, Sigrid
(86) Numéro de dépôt international: PCT/EP2014/000562
(87) Numéro de publication internationale: WO 2014/135278

(56) Documents cités:
- EP-A1- 2 406 159
- EP-A2- 0 638 502
- DE-A1- 1 915 647
- JP-U- H0 738 024
- US-A- 2 826 290

## Description

La présente invention concerne un dispositif permettant de transporter des éléments plats, notamment à travers un module d'une machine de traitement. L'invention trouve une application particulièrement avantageuse, mais non exclusive, dans le domaine de la fabrication des boîtes d'emballage en carton.

Dans l'industrie de l'emballage, la fabrication des boîtes pliantes s'effectue traditionnellement en ligne, en pliant et en collant des découpes au moyen d'une plieuse-colleuse. Une telle machine de traitement se présente habituellement sous la forme d'une succession de modules dans lesquelles sont répartis différents agencements fonctionnels chargés de réaliser les multiples opérations élémentaires nécessaires à la confection des boîtes. Chaque module dispose de son propre système de convoyage des découpes, mais l'ensemble est agencé de manière à ce qu'au final, le transport s'opère de façon continue sur toute la longueur de la plieuse-colleuse.

Parmi les systèmes de convoyage connus de l'état de la technique, les transporteurs à courroies s'avèrent particulièrement bien adaptés aux plieuses-colleuses. Ce type de dispositif de transport est schématiquement constitué par une courroie sans fin qui est à même d'être entraînée en défilement autour d'une pluralité d'organes de guidage. Parmi ceux-ci, il existe essentiellement des éléments de renvoi qui définissent le parcours suivi par la courroie, ainsi que des éléments d'appui qui servent de soutien à cette dernière dans la zone où s'opère concrètement le transport, c'est-à-dire le long du chemin de convoyage des découpes.

### Etat de la technique

En pratique, lorsqu'un transporteur à courroie est implanté longitudinalement dans un module de plieuse-colleuse, il est généralement monté mobile en déplacement latéral afin de pouvoir régler sa position transversale en fonction de la taille et/ou de la forme des découpes à transporter. Par ailleurs, et bien qu'il puisse à priori être utilisé seul en tant que simple transporteur inférieur, il est usuellement employé en combinaison avec un transporteur à courroie supérieur ou une rampe supérieure équipée de galets presseurs.

Ce type de dispositif de transport présente toutefois l'inconvénient de devoir être intégré entièrement à l'intérieur du module. Il s'avère en effet guère envisageable de le faire dépasser, sous peine de voir sa mobilité transversale restreinte, voire même interdite par la présence d'un obstacle dans son environnement extérieur immédiat, tel que pense notamment un transporteur à courroie d'un module directement adjacent.

Ainsi donc, si une complète intégration permet de garantir le libre déplacement transversal des transporteurs de deux modules successifs, elle leur impose aussi un positionnement relatif quelque peu distant suivant la direction longitudinale, même dans le cas où les transporteurs sont placés dans le prolongement les uns des autres. Cela implique que lorsqu'une découpe va être transférée d'un module à l'autre, elle va inévitablement traverser un espace vide dans lequel aucun maintien ni guidage n'est assuré. Il va donc inévitablement se produire des glissements qui vont avoir naturellement tendance à fausser la position des découpes, ce qui au final peut nuire significativement au processus de fabrication des boîtes. En outre, US 2 826 290 A décrit un dispositif selon le préambule de la revendication 1.

### Exposé de l'invention

Aussi, le problème technique à résoudre par l'objet de la présente invention, est de proposer un dispositif de transport d'éléments plats le long d'un chemin de convoyage donné, comprenant un organe de transport sans fin qui est guidée en défilement sur toute la longueur du chemin de convoyage par une succession d'organes de guidage sensiblement adjacents. Le dispositif de transport permet d'éviter les problèmes de l'état de la technique en améliorant le transfert de chaque élément plat au moment où ce dernier arrive à son extrémité amont et/ou lorsqu'il quitte son extrémité aval.

Une partie des organes de guidage, au moins un organe de guidage mobile est montée mobile en écartement par rapport à une autre partie des organes de guidage, dits organes de guidage statiques, qui est montée fixe, ladite mobilité s'exerçant entre une position rétractée dans laquelle le ou les organes de guidage mobiles sont placés dans la continuité directe des organes de guidage statiques, et une position déployée dans laquelle le ou les organes de guidage mobiles se tiennent à distance des organes de guidage statiques.

La solution au problème technique posé consiste, selon la présente invention, en ce que le dispositif de transport comporte en outre des organes de guidage complémentaires qui sont montés mobiles en déplacement entre une position de réserve dans laquelle ils sont placés à distance des organes de guidage statiques et du ou des organes de guidage mobiles lorsque ces derniers sont en position rétractée, et une position de service dans laquelle ils sont intercalés de façon continue entre les organes de guidage statiques et le ou les organes de guidage mobiles lorsque ces derniers sont en position déployée.

La notion d'élément plat s'étend à tout objet aplati et de faible épaisseur, indépendamment de son contour, de son format ou du matériau qui le compose, tel qu'une feuille entière, une feuille prédécoupée, un ensemble de poses ou découpes attachées ponctuellement les unes aux autres, une pose ou découpe individuelle, une boîte pliante, etc. Par ailleurs, un tel élément plat peut être réalisé dans un matériau quelconque, et notamment en papier, en carton compact, en carton ondulé, en matière plastique, etc.

La notion d'organe de transport sans fin va concerner n'importe quel élément qui est conformé en boucle et qui dispose d'une souplesse structurelle suffisante pour lui permettre de défiler de façon continue le long d'un parcours fermé non-linéaire. Un tel organe de transport désigne le plus souvent une fine courroie, une bande plus ou moins étroite, ou un tapis de largeur quelconque.

La nature et les dimensions de l'organe de transport vont déterminer le type et la taille des différents organes de guidage présents le long du chemin de convoyage des éléments plats. Mais la fonction première de chaque organe de guidage va aussi rentrer en compte, suivant que ce dernier va jouer un rôle de renvoi venant guider l'organe de transport à une des deux extrémités du chemin de convoyage, ou un rôle de support servant de surface d'appui audit organe de transport entre lesdites extrémités du chemin de convoyage. Ces différents organes de guidage sont de préférence constitués par des éléments rotatifs tels que des galets ou des rouleaux, bien que des éléments statiques tels que des glissières et autres supports fixes s'avèrent également envisageables.

L'invention telle qu'ainsi définie permet au dispositif de transport de disposer d'une structure à géométrie variable, grâce à laquelle la longueur du trajet de convoyage varie. Il est ainsi possible de modifier la portée du dispositif de transport, aussi bien à son extrémité aval qu'à son extrémité amont, ce qui permet au final d'adapter l'encombrement longitudinal dudit dispositif.

Une telle capacité d'adaptation peut être avantageusement utilisée pour adopter une configuration de réglage dans laquelle le dispositif de transport est compacté longitudinalement, afin de garantir sa liberté de déplacement transversal. Mais cette capacité d'adaptation peut aussi être employée pour placer le dispositif de transport dans une configuration optimale de fonctionnement dans laquelle il est déployé longitudinalement, afin de favoriser la continuité de la fonction transport à ses extrémités.

L'invention peut s'appliquer indifféremment à un dispositif de transport inférieur ou à un dispositif de transport supérieur. Elle peut être mise en oeuvre aussi bien au niveau de la partie amont qu'au niveau de la partie aval du dispositif de transport considéré.

Un dispositif de transport conforme à l'invention peut équiper toute machine dans laquelle sont convoyés des éléments plats. Si une telle machine dispose par ailleurs d'une structure modulaire, comme c'est notamment le cas d'une plieuse-colleuse, le dispositif peut à priori être implanté dans n'importe quel module.

### Brève description des dessins

La présente invention concerne en outre les caractéristiques qui ressortiront de la description qui va suivre, et qui devront être considérées isolément ou selon toutes leurs combinaisons techniques possibles. Cette description, donnée à titre d'exemple non limitatif, est destinée à mieux faire comprendre l'invention et comment elle peut être réalisée. La description est par ailleurs donnée en référence aux dessins annexés dans lesquels:
- la Figure 1 illustre une plieuse-colleuse dans laquelle est intégré un module de gaufrage de caractères braille, qui est équipé de dispositifs de transport conformes à l'invention;
- la Figure 2 montre la partie basse de la structure interne du module de gaufrage, sur laquelle est monté un des dispositifs de transport;
- la Figure 3 représente la portion aval du dispositif de transport en vue éclatée;
- la Figure 4 fait elle aussi apparaître la portion aval du dispositif de transport, mais dans un état assemblé et suivant un angle de vue sensiblement opposé à celui de la Figure 3;
- la Figure 5 est une vue de côté illustrant le dispositif de transport en position rétractée;
- la Figure 6 constitue une vue similaire à la Figure 5, mais avec la partie mobile du dispositif de transport en cours de déplacement; et
- la Figure 7 est une vue de côté montrant le dispositif de transport en position déployée.

### Exposé détaillé des formes de réalisation préférées

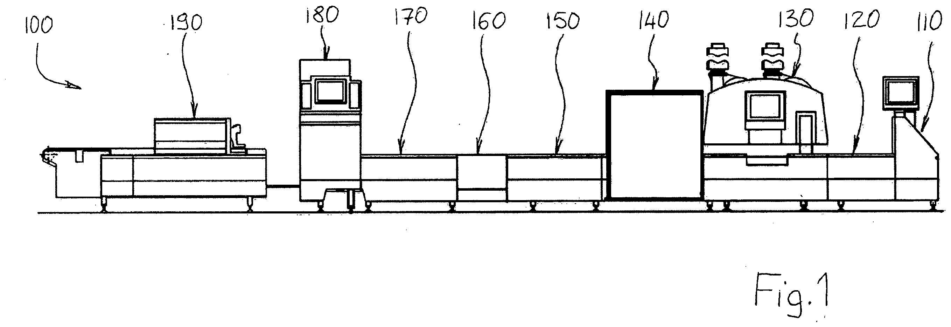

La Fig. 1 illustre une plieuse-colleuse 100, c'est-à-dire une machine de traitement qui est chargée de plier et de coller une succession d'éléments plats en forme de découpes en vue de fabriquer des boîtes pliantes. Dotée d'une structure modulaire, cette plieuse-colleuse 100 est classiquement composée d'un margeur 110, d'un module d'alignement 120, d'un module de contrôle qualité 130, d'un module de gaufrage de caractères braille 140, d'un module de précassage 150, d'un module d'encollage 160, d'un module de pliage 170, d'un module de transfert 180 et d'un module de réception 190. Ces différents éléments étant parfaitement connus de l'état de la technique, ils ne sont pas décrits en détail ici, tant structurellement que fonctionnellement.

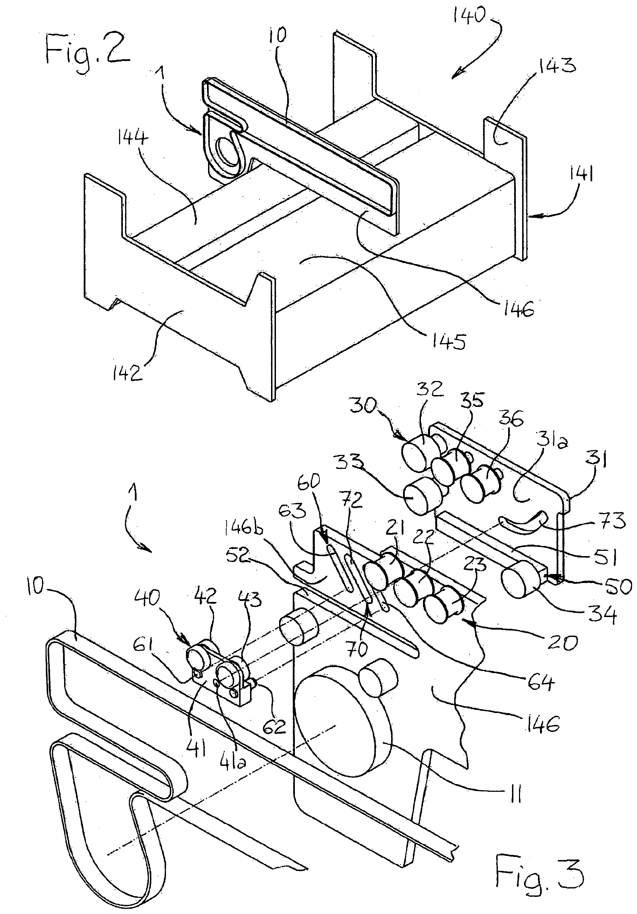

Les Figs. 2 à 7 concernent uniquement le module de gaufrage 140, et plus particulièrement le système de convoyage qui est chargé de transporter horizontalement les différentes découpes sur toute la longueur dudit module. Ce système de convoyage est remarquable en ce qu'il met en oeuvre plusieurs dispositifs de transport 1 conformes à l'invention. Concrètement, trois transporteurs inférieurs sont constitués par un élément central et deux éléments latéraux, auxquels sont associés trois transporteurs supérieurs composés eux aussi d'un élément central et de deux éléments latéraux. L'ensemble est logiquement agencé de telle sorte que les trois transporteurs supérieurs s'étendent respectivement au dessus et en regard des trois transporteurs inférieurs.

Pour d'évidentes raisons de clarté, seul un des dispositifs de transport 1 a été représenté sur la Fig. 2. Et comme il s'agit d'un transporteur inférieur, c'est uniquement la partie basse de la structure interne du module de gaufrage 140 qui apparaît sur cette représentation. Enfin et toujours dans cette même logique, l'agencement fonctionnel chargé de réaliser le gaufrage des découpes n'est pas non plus visible.

La Fig. 2 montre toutefois que la partie basse de la structure interne du module 140 est constituée par un bâti 141 qui est essentiellement composé de deux parois latérales verticales 142, 143 reliées par deux traverses horizontales 144, 145. Le dispositif de transport 1 est quant à lui monté sur un longeron 146 qui est implanté longitudinalement dans le module 140, et qui est monté mobile en translation latérale par rapport au bâti 141 afin que sa position transversale soit réglable. Concrètement, et bien que cela ne soit pas visible sur la Fig. 2, les parties avant et arrière du longeron 146 coopèrent par coulissement avec deux rails de guidage transversaux qui sont respectivement solidaires des traverses avant 144 et arrière 145 du bâti 141.

On observe également sur la Fig. 2 que le dispositif de transport 1 est conçu pour convoyer chaque découpe le long d'un chemin de convoyage qui s'étend sur toute la longueur du module de gaufrage 140. Le déplacement proprement dit s'opère avec la découpe à plat, par translation horizontale suivant une trajectoire qui est linéaire et orientée parallèlement à l'axe de la plieuse-colleuse 100.

Ainsi qu'on peut le voir sur les différentes Figs. 2 à 7, le dispositif de transport 1 est composé d'un organe de transport sans fin 10 de structure souple qui est à même d'être entraîné en défilement sur toute la longueur du chemin de convoyage des découpes, ainsi que d'une succession d'organes de guidage 20 et 30 qui sont en mesure de guider le défilement de l'organe de transport 10 sur toute la longueur dudit chemin de convoyage.

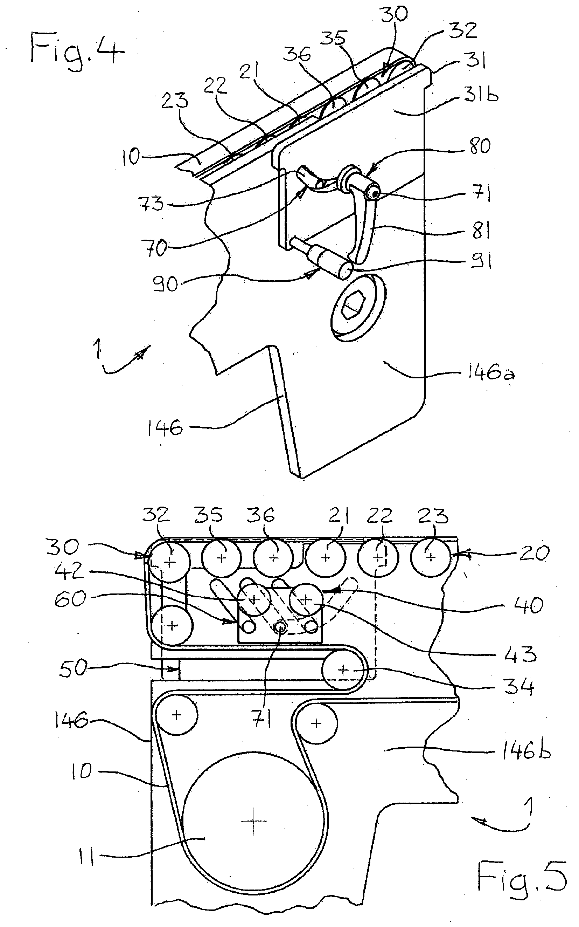

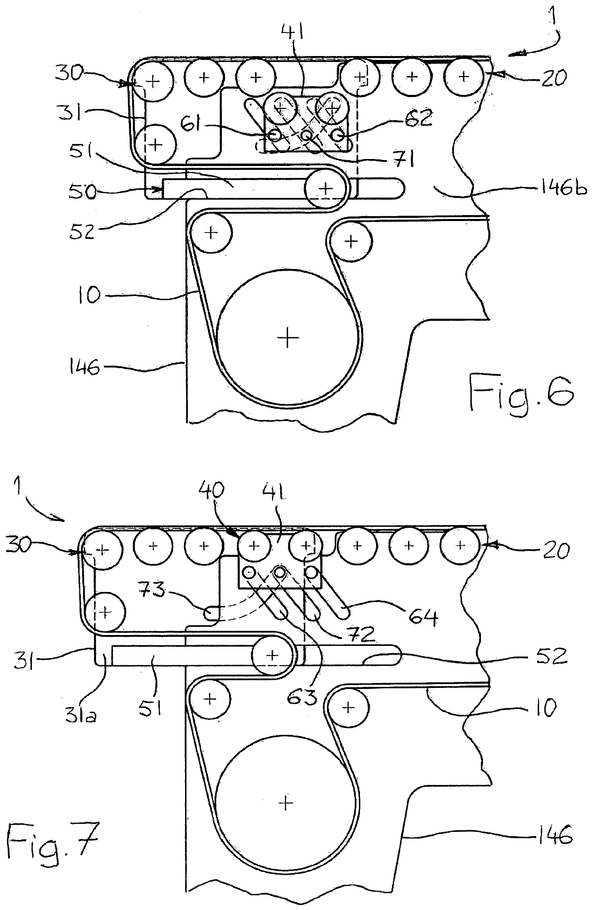

Conformément à l'objet de la présente invention, une partie des organes de guidage, dits organes de guidage mobiles 30, est montée mobile en écartement par rapport à une autre partie des organes de guidage, dits organes de guidage statiques 20, qui est montée fixe. Cette mobilité s'exerce entre une position rétractée dans laquelle les organes de guidage mobiles 30 sont placés dans la continuité directe des organes de guidage statiques 20 (Fig. 5), et une position déployée dans laquelle lesdits organes de guidage mobiles 30 se tiennent à distance desdits organes de guidage statiques 20 (Fig. 7). Par ailleurs, le dispositif de transport 1 comporte en outre des organes de guidage complémentaires 40 qui sont montés mobiles en déplacement entre une position de réserve dans laquelle ils sont placés à distance des organes de guidage statiques 20 et des organes de guidage mobiles 30 lorsque ces derniers sont en position rétractée (Fig. 5), et une position de service dans laquelle ils sont intercalés de façon continue entre lesdits organes de guidage statiques 20 et lesdits organes de guidage mobiles 30 lorsque ces derniers sont en position déployée (Fig. 7).

Il est entendu qu'à ce stade de la description, le déplacement des organes de guidage mobiles 30 peut à priori s'effectuer suivant un mouvement quelconque, tel que par exemple une translation, une rotation, ou une combinaison de ces deux types de mouvement. Il est simplement essentiel qu'une fois la position rétractée ou la position déployée atteinte, les organes de guidage mobiles 30 et les organes de guidage statiques 20 se retrouvent systématiquement placés tangentiellement au chemin de convoyage des éléments plats. Il en est de même en ce qui concerne le mouvement de déplacement des organes de guidage complémentaires 40 qui peut lui aussi être quelconque. L'important est ici qu'en position de service, les organes de guidage complémentaires 40 en question soient disposés eux aussi tangentiellement au chemin de convoyage des éléments plats, mais qu'en position de réserve, ils se tiennent en retrait par rapport à ce dernier.

Dans ce mode particulier de réalisation, choisi uniquement à titre d'exemple, le dispositif de transport 1 est du type transporteur à courroie. Il utilise en effet un organe de transport 10 qui se présente sous la forme d'une courroie qui est entraînée en défilement sur elle-même par l'intermédiaire d'une poulie d'entraînement 11, tandis que les différents organes de guidage 20, 30 et 40 sont constitués par des galets rotatifs 21, 22, 23, 32, 33, 34, 35, 36, 42 et 43. Parmi ces derniers, certains jouent davantage le rôle de renvoi comme les galets 32, 33 et 34 par exemple, alors que d'autres remplissent avant tout une fonction de support comme c'est le cas notamment des galets 21, 22, 23, 35, 36, 42 et 43.

Selon une particularité de l'invention, entre la position rétractée (Fig. 5) et la position déployée (Fig. 7), les différents organes de guidage mobiles 30 sont montés solidairement mobiles en translation longitudinale, suivant une trajectoire qui est sensiblement parallèle au chemin de convoyage des éléments plats. Il est à noter que suivant le profil du chemin de convoyage utilisé, la trajectoire de déplacement des organes de guidage mobiles 30 peut être rectiligne, curviligne, ou résulter d'une combinaison de ces deux types de mouvement.

De manière particulièrement avantageuse, le dispositif de transport 1 est doté de premiers moyens de guidage 50 qui sont en mesure de guider le déplacement des organes de guidage mobiles 30 entre la position rétractée et la position déployée.

Dans cet exemple de réalisation, les différents organes de guidage mobiles 30 sont donc montés mobiles en translation de façon solidaire. Ces derniers sont en effet fixés sur une même plaque support 31 qui est à même de glisser contre une face latérale 146a du longeron 146 (Fig. 4). Les premiers moyens de guidage 50 sont concrètement constitués par nervure rectiligne 51 qui s'étend latéralement le long de la face interne 31a de la plaque support 31, et qui coopère par coulissement avec une fente rectiligne 52 ménagée horizontalement à l'avant du longeron 146 (Figs. 5 à 7). La plaque support 31 peut ainsi translater longitudinalement au sein du module de gaufrage 140, suivant une trajectoire rectiligne et horizontale qui est parallèle au chemin de convoyage des découpes.

Selon une autre particularité de l'invention, entre la position de réserve (Fig. 5) et la position de service (Fig. 7), les différents organes de guidage complémentaires 40 sont montés solidairement mobiles en translation longitudinale, suivant une trajectoire qui est sensiblement oblique par rapport au chemin de convoyage des éléments plats. Là encore, la trajectoire de déplacement des organes de guidage complémentaires 40 peut à priori être quelconque, c'est-à-dire être rectiligne, curviligne, ou résulter d'une combinaison de ces deux types de mouvement.

De manière particulièrement avantageuse, le dispositif de transport 1 est pourvu de seconds moyens de guidage 60 qui sont en mesure de guider le déplacement des organes de guidage complémentaires 40 entre la position de réserve et la position de service.

Dans cet exemple de réalisation, les organes de guidage complémentaires 40 sont solidaires dans leur déplacement. Ils sont pour cela montés sur un chariot support 41 qui est à même de glisser contre la face latérale 146b du longeron 146; ladite face 146b étant opposée à la face 146a précédemment décrite. Les seconds moyens de guidage 60 comprennent pour leur part deux doigts 61, 62 qui s'étendent latéralement depuis la face interne du chariot support 41, et qui coopèrent par coulissement avec respectivement deux fentes rectilignes 63, 64 ménagées à travers le longeron 146, juste au-dessus de la fente 52 (Figs. 4 à 7). Les fentes 63, 64 s'étendant par ailleurs de façon oblique par rapport au chemin de convoyage, la translation du chariot support 41 va logiquement s'effectuer suivant une trajectoire tout aussi rectiligne et oblique. Il est à noter que l'utilisation simultanée de deux doigts 61, 62 est destinée à réaliser un double guidage, afin de garantir la stabilité du chariot support 41 pendant son déplacement et d'éviter ainsi tout risque de basculement.

Selon l'invention, le dispositif de transport 1 dispose de moyens de couplage 70 qui sont capables d'entraîner le déplacement des organes de guidage complémentaires 40 entre la position de réserve et la position de service, lorsque les organes de guidage mobiles 30 sont déplacés entre la position rétractée et la position déployée.

Plus précisément, les moyens de couplage 70 comprennent un élément d'entraînement 71 qui est solidaire des organes de guidage complémentaires 40, et qui coopère simultanément par coulissement avec d'une part un élément de guidage solidaire des organes de guidage statiques 20, dit guide d'entraînement statique 72, et d'autre part un élément de guidage solidaire des organes de guidage mobiles 30, dit guide d'entraînement mobile 73. Le guide d'entraînement statique 72 est ménagé de façon à définir une trajectoire de guidage oblique qui s'étend dans un plan longitudinal vertical et qui va en se rapprochant du chemin de convoyage par rapport au sens de déplacement des éléments plats. Le guide d'entraînement mobile 73 est quant à lui conformé de manière à définir une trajectoire de guidage oblique qui s'étend dans un plan longitudinal vertical et qui va en se s'éloignant du chemin de convoyage par rapport au sens de déplacement des éléments plats.

La Fig. 5 montre plus particulièrement qu'en position rétractée, l'élément d'entraînement 71 se situe aux extrémités respectives des guides d'entraînement 72, 72, qui sont les plus éloignées du chemin de convoyage, alors que la Fig. 7 indique qu'en position déployée, il se positionne au niveau des extrémités qui sont les plus proches. Conformément aux Figs. 5 à 7, l'ensemble est agencé de telle sorte que tout déplacement des organes de guidage mobiles 30 par rapport aux organes de guidage statiques 20, oblige l'élément d'entraînement 71 à coulisser simultanément le long des deux guides d'entraînement 72 et 73. Et comme ces derniers sont disposés obliquement par rapport au chemin de convoyage et suivant des directions sensiblement croisées, le double coulissement de l'élément d'entraînement 71 va provoquer le déplacement des organes de guidage complémentaires 40.

Il est entendu ici que la nature, la forme, les dimensions et la disposition des guides d'entraînement 72 et 73 vont dépendre directement de celles de l'élément d'entraînement 71 qui leur est associé, et vice-versa. Mais en pratique, chaque guide d'entraînement 72 et 73 se présente le plus souvent sous la forme d'une fente, d'une rainure ou d'une nervure, alors que l'élément d'entraînement 71 adopte simplement toute forme qui soit compatible en terme de guidage avec chacun des guides d'entraînement 72 et 73.

Dans cet exemple de réalisation, le guide d'entraînement statique 72 est constitué par une fente qui est ménagée à travers le longeron 146, et qui s'étend de façon oblique par rapport au chemin de convoyage en suivant une direction qui va en se rapprochant dudit chemin de convoyage par rapport au sens de déplacement des éléments plats. Le guide d'entraînement mobile 73 se présente quant à lui sous la forme d'une fente qui est ménagée à travers la plaque support 31, et qui s'étend de façon oblique par rapport au chemin de convoyage, suivant une trajectoire qui va en se s'éloignant dudit chemin de convoyage par rapport au sens de déplacement des éléments plats. Enfin, l'élément d'entraînement 71 est constitué par une tige qui est fixée au chariot support 41 au niveau d'un trou 41a, et qui s'étend transversalement en traversant successivement le guide d'entraînement statique 72 et le guide d'entraînement mobile 73.

De manière particulièrement avantageuse, l'un des guides d'entraînement 72 définit une trajectoire de guidage rectiligne, tandis que l'autre guide d'entraînement 73 définit une trajectoire de guidage curviligne. L'intérêt d'une telle configuration est de rendre le déplacement des organes de guidage complémentaires 40 non-linéaire dans le temps par rapport au déplacement des organes de guidage mobiles 30.

Dans cet exemple de réalisation, le guide d'entraînement statique 72 est constitué par une fente rectiligne, alors que le guide d'entraînement mobile 73 se présente sous la forme d'une fente curviligne. Si l'on considère le passage de la position rétractée à la position déployée (Figs. 5 à 7), cette configuration permet dans un premier temps de privilégier le déplacement des organes de guidage mobiles 30. Dans un second temps, elle permet aux organes de guidage complémentaires 40 de contourner facilement les organes de guidage mobiles 30 malgré leurs encombrements respectifs. Enfin dans un troisième temps, cela favorise le déplacement des organes de guidage complémentaires 40 suivant une direction sensiblement orthogonale au chemin de convoyage, ce qui au final facilite leur insertion entre les organes de guidage mobiles 30 et les organes de guidage statiques 20. Bien entendu, le passage de la position déployée à la position rétractée va s'effectuer suivant la cinématique inverse.

Selon une autre particularité de l'invention, le dispositif de transport 1 est également doté de moyens de verrouillage 80 qui sont en mesure de bloquer la mobilité des organes de guidage mobiles 30 entre la position rétractée et la position déployée.

Dans cet exemple de réalisation, les moyens de verrouillage 80 sont concrètement constitués par une poignée 81 dans laquelle est ménagé un taraudage apte à coopérer par vissage avec l'extrémité filetée de la tige 71. Le blocage des organes de guidage mobiles 30 s'opère donc pas simple serrage de la poignée de verrouillage 81 contre la plaque support 31 (Fig. 4).

Conformément à une autre caractéristique avantageuse, le dispositif de transport 1 est en outre pourvu de moyens de manipulation 90 qui sont solidaires des organes de guidage mobiles 30, et qui sont à même d'être activés manuellement pour entraîner le déplacement des organes de guidage mobiles 30 entre la position rétractée et la position déployée.

Dans cet exemple de réalisation, les moyens de manipulation 90 se présente concrètement sous la forme d'une poignée 91 qui est fixée à la face externe 31b de la plaque support 31 et qui s'étend transversalement. Le déplacement des organes de guidage mobiles 30 s'effectue par conséquent simplement en tirant ou en poussant longitudinalement la poignée de manipulation 91 (Fig. 4) lorsque les moyens de verrouillage 80 sont désactivés.

Bien entendu, l'invention est également relative à tout module 140 d'une machine de traitement 100 d'éléments plats, qui comprend au moins un dispositif de transport 1 tel que précédemment décrit. Est ainsi concerné, n'importe quel type de module susceptible d'être intégré dans une machine de traitement, qu'il s'agisse d'un simple module de convoyage ou d'un module plus complexe car doté d'une fonctionnalité principale spécifique en plus de sa fonction transport, tel que notamment un margeur, un module d'alignement, un module de contrôle qualité, un module de gaufrage de caractères braille, un module de précassage, un module d'encollage, un module de pliage, un module de transfert, un module de réception, etc., dans le cas par exemple d'une machine de traitement de type plieuse-colleuse

Mais plus généralement encore, l'invention concerne aussi toute machine de traitement 100 d'éléments plats, qui dispose d'au moins un dispositif de transport 1 tel que précédemment décrit. Il est entendu ici que la notion de machine de traitement s'avère très large puisqu'elle s'étend du simple convoyeur d'objets plats, à n'importe quelle machine plus ou moins complexe dans laquelle s'opère un transport d'objets plats, comme par exemple une plieuse-colleuse.

## Revendications

1. Dispositif de transport (1) d'éléments plats le long d'un chemin de convoyage donné, comprenant:
- un organe de transport sans fin (10) qui est guidé en défilement sur toute la longueur du chemin de convoyage par une succession d'organes de guidage (20, 30) sensiblement adjacents, au moins un organe de guidage mobile (30) étant monté mobile en écartement par rapport à des organes de guidage statiques (20) étant montée fixes, entre une position rétractée dans laquelle l'organe de guidage mobile (30) est placé dans la continuité directe des organes de guidage statiques (20), et une position déployée dans laquelle l'organe de guidage mobile (30) se tient à distance des organes de guidage statiques (20), et
- des organes de guidage complémentaires (40) qui sont montés mobiles en déplacement entre une position de réserve dans laquelle ils sont placés à distance des organes de guidage statiques (20) et de l'organe de guidage mobile (30) lorsque ce dernier est en position rétractée, et une position de service dans laquelle ils sont intercalés de façon continue entre les organes de guidage statiques (20) et l'organe de guidage mobile (30) lorsque ce dernier est en position déployée,
**caractérisé en ce qu'**il comporte des moyens de couplage (70),
- qui sont aptes à entraîner le déplacement des organes de guidage complémentaires (40) entre la position de réserve et la position de service, lorsque l'organe de guidage mobile (30) est déplacé entre la position rétractée et la position déployée, et
- qui comportent un élément d'entraînement (71) qui est solidaire des organes de guidage complémentaires (40), et qui coopère simultanément par coulissement avec
- d'une part un élément de guidage solidaire des organes de guidage statiques (20), dit guide d'entraînement statique (72), définissant une trajectoire de guidage oblique qui va en se rapprochant du chemin de convoyage par rapport au sens de déplacement des éléments plats, et
- d'autre part un élément de guidage solidaire de l'organe de guidage mobile (30), dit guide d'entraînement mobile (73), définissant une trajectoire de guidage oblique qui va en se s'éloignant du chemin de convoyage par rapport au sens de déplacement des éléments plats.

2. Dispositif selon la revendication 1, **caractérisé en ce qu'**entre la position rétractée et la position déployée, l'organe de guidage mobile (30) est monté solidairement mobile en translation longitudinale suivant une trajectoire qui est sensiblement parallèle au chemin de convoyage des éléments plats.

3. Dispositif selon la revendications 1 ou 2, **caractérisé en ce qu'**il comporte des premiers moyens de guidage (50) aptes à guider le déplacement de l'organe de guidage mobile (30) entre la position rétractée et la position déployée.

4. Dispositif selon l'une des revendications précédentes, **caractérisé en ce qu'**entre la position de réserve et la position de service, les différents organes de guidage complémentaires (40) sont montés solidairement mobiles en translation longitudinale suivant une trajectoire qui est sensiblement oblique par rapport au chemin de convoyage des éléments plats.

5. Dispositif selon l'une des revendications précédentes, **caractérisé en ce qu'**il comporte des seconds moyens de guidage (60) aptes à guider le déplacement des organes de guidage complémentaires (40) entre la position de réserve et la position de service.

6. Dispositif selon l'une des revendications précédentes, **caractérisé en ce que** l'un des guides d'entraînement (72, 73) définit une trajectoire de guidage rectiligne, tandis que l'autre guide d'entraînement (72, 73) définit une trajectoire de guidage curviligne.

7. Dispositif selon l'une des revendications précédentes, **caractérisé en ce qu'**il comporte des moyens de verrouillage (80) aptes à bloquer la mobilité de l'organe de guidage mobile (30) entre la position rétractée et la position déployée.

8. Dispositif selon l'une des revendications précédentes, **caractérisé en ce qu'**il comporte des moyens de manipulation (90) qui sont solidaires de l'organe de guidage mobile (30) et qui sont aptes à être activés manuellement pour entraîner le déplacement de l'organe de guidage mobile (30) entre la position rétractée et la position déployée.

9. Module (140) d'une machine de traitement (100) d'éléments plats, **caractérisé en ce qu'**il comporte au moins un dispositif de transport (1) selon l'une des revendications précédentes.

10. Machine de traitement (100) d'éléments plats, **caractérisée en ce qu'**elle comporte au moins un dispositif de transport (1) selon l'une des revendications 1 à 8.

## Patentansprüche

1. Vorrichtung zum Transport (1) flacher Elemente entlang einer vorgegebenen Förderstrecke, umfassend
- ein endloses Transportorgan (10), das im Lauf entlang der gesamten Länge der Förderstrecke durch eine Abfolge von im Wesentlichen benachbarten Führungsorganen (20, 30) geführt wird, wobei mindestens ein bewegliches Führungsorgan (30) im Abstand zu fest angebrachten, statischen Führungsorganen (20) zwischen einer eingefahrenen Position, in der sich das bewegliche Führungsorgan (30) in der direkten Fortsetzung der statischen Führungsorgane (20) befindet, und einer ausgefahrenen Position beweglich angebracht ist, in der das bewegliche Führungsorgan (30) von den statischen Führungsorganen (20) beabstandet ist, und
- komplementäre Führungsorgane (40), die beweglich in einer Verschiebung zwischen einer Reserveposition, in der sie von den statischen Führungsorganen (20) und dem beweglichen Führungsorgan (30) beabstandet angeordnet sind, wenn sich das letztere in der eingefahrenen Position befindet, und einer Betriebsposition angebracht sind, in der sie kontinuierlich zwischen den statischen Führungsorganen (20) und dem beweglichen Führungsorgan (30) angeordnet sind, wenn sich das letztere in der ausgefahrenen Position befindet,
**dadurch gekennzeichnet, dass** sie ferner Kupplungsmittel (70) umfasst,
- die dazu ausgelegt sind, die Verschiebung der komplementären Führungsorgane (40) zwischen der Reserveposition und der Betriebsposition zu bewirken, wenn das bewegliche Führungsorgan (30) zwischen der eingefahrenen Position und der ausgefahrenen Position verschoben wird, und
- die ein Antriebselement (71) aufweisen, das mit den komplementären Führungsorganen (40) fest verbunden ist und das gleichzeitig durch Gleiten zusammenwirkt
- einerseits mit einem Führungsorgan, das mit den statischen Führungsorganen (20) fest verbunden ist, statische Antriebsführung (72) genannt wird und eine schräge Führungsbahn definiert, die sich der Förderstrecke in Bezug auf die Verschiebungsrichtung der flachen Elemente annähert, und
- andererseits mit einem Führungsorgan, das mit dem beweglichen Führungsorgan (30) fest verbunden ist, die mobile Antriebsführung (73) genannt wird und eine schräge Führungsbahn definiert, die sich von der Förderstrecke in Bezug auf die Verschiebungsrichtung der flachen Elemente entfernt.

2. Vorrichtung nach Anspruch 1, **dadurch gekennzeichnet, dass** zwischen der eingefahrenen Position und der ausgefahrenen Position das bewegliche Führungsorgan (30) in Längstranslation entlang einer Bahn gemeinsam beweglich angebracht ist, die im Wesentlichen parallel zu der Förderstrecke der flachen Elemente ist.

3. Vorrichtung nach Anspruch 1 oder 2, **dadurch gekennzeichnet, dass** sie erste Führungsmittel (50) umfasst, die dazu ausgelegt sind, die Verschiebung des beweglichen Führungsorgans (30) zwischen der eingefahrenen Position und der ausgefahrenen Position zu führen.

4. Vorrichtung nach einem der vorhergehenden Ansprüche, **dadurch gekennzeichnet, dass** zwischen der Reserveposition und der Betriebsposition die verschiedenen komplementären Führungsorgane (40) in Längstranslation entlang einer Bahn gemeinsam beweglich angebracht sind, die im Wesentlichen schräg zu der Förderstrecke der flachen Elemente verläuft.

5. Vorrichtung nach einem der vorhergehenden Ansprüche, **dadurch gekennzeichnet, dass** sie zweite Führungsmittel (60) umfasst, die dazu ausgelegt sind, die Verschiebung der komplementären Führungsorgane (40) zwischen der Reserveposition und der Betriebsposition zu führen.

6. Vorrichtung nach einem der vorhergehenden Ansprüche, **dadurch gekennzeichnet, dass** eine der Antriebsführungen (72, 73) eine geradlinige Führungsbahn definiert, während die andere Antriebsführung (72, 73) eine krummlinige Führungsbahn definiert.

7. Vorrichtung nach einem der vorhergehenden Ansprüche, **dadurch gekennzeichnet, dass** sie Verriegelungsmittel (80) aufweist, die dazu ausgelegt sind, die Beweglichkeit des beweglichen Führungsorgans (30) zwischen der eingefahrenen Position und der ausgefahrenen Position zu blockieren.

8. Vorrichtung nach einem der vorhergehenden Ansprüche, **dadurch gekennzeichnet, dass** sie Handhabungsmittel (90) aufweist, die mit dem beweglichen Führungsorgan (30) fest verbunden sind und die dazu ausgelegt sind, manuell aktiviert zu werden, um die Verschiebung des beweglichen Führungsorgans (30) zwischen der eingefahrenen Position und der ausgefahrenen Position zu bewirken.

9. Modul (140) einer Maschine zur Verarbeitung (100) von flachen Elementen, **dadurch gekennzeichnet, dass** es mindestens eine Transportvorrichtung (1) nach einem der vorhergehenden Ansprüche aufweist.

10. Maschine zur Verarbeitung (100) flacher Elemente, **dadurch gekennzeichnet, dass** sie mindestens eine Transportvorrichtung (1) nach einem der Ansprüche 1 bis 8 aufweist.

## Claims

1. Device for transporting (1) flat elements along a given conveyor path, comprising:
- an endless transport member (10) which is roll-guided over the whole length of the conveyor path by a succession of substantially adjacent guiding members (20, 30), at least one mobile guiding member (30) being mounted mobile offset with respect to static guiding members (20) being mounted secured, between a retracted position wherein the mobile guiding member (30) is placed in the direct continuity of the static guiding members (20), and a deployed position wherein the mobile guiding member (30) stands at a distance from the static guiding members (20), and
- complementary guiding members (40) which are mounted mobile in movement between a reserve position wherein they are placed at a distance from the static guiding members (20) and the mobile guiding member (30) when the latter is in the retracted position, and a service position wherein they are inserted continuously between the static guiding members (20) and the mobile guiding member (30) when the latter is in the deployed position,
**characterised in that** it comprises coupling means (70),
- which are capable of driving the movement of the complementary guiding members (40) between the reserve position and the service position, when the mobile guiding member (30) is moved between the retracted position and the deployed position, and
- which comprise a drive element (71) which is secured to the complementary guiding members (40), and which engages simultaneously by sliding with
- on the one hand, a guiding element secured to the static guiding members (20), called static drive guide (72), defining an oblique guiding path which will approach the conveyor path with respect to the movement direction of the flat elements, and
- on the other hand, a guiding element secured to the mobile guiding member (30), called mobile drive guide (73), defining an oblique guiding path, which will extend away from the conveyor path with respect to the movement direction of the flat elements.

2. Device according to claim 1, **characterised in that** between the retracted position and the deployed position, the mobile guiding member (30) is mounted secured, mobile in longitudinal translation along a path which is substantially parallel to the conveyor path of the flat elements.

3. Device according to claim 1 or 2, **characterised in that** it comprises first guiding means (50), capable of guiding the movement of the mobile guiding member (30) between the retracted position and the deployed position.

4. Device according to any of the preceding claims, **characterised in that** between the reserve position and the service position, the different complementary guiding members (40) are mounted secured, mobile in longitudinal translation along a path which is substantially oblique with respect to the conveyor path of the flat elements.

5. Device according to any of the preceding claims, **characterised in that** it comprises second guiding means (60), capable of guiding the movement of the complementary guiding members (40) between the reserve position and the service position.

6. Device according to any of the preceding claims, **characterised in that** one of the drive guides (72, 73) defines a rectilinear guiding path, while the other drive guide (72, 73) defines a curved line guiding path.

7. Device according to any of the preceding claims, **characterised in that** it comprises locking means (80), capable of blocking the mobility of the mobile guiding member (30) between the retracted position and the deployed position.

8. Device according to any of the preceding claims, **characterised in that** it comprises handling means (90) which are secured to the mobile guiding member (30) and which are capable of being manually activated to drive the movement of the mobile guiding member (30) between the retracted position and the deployed position.

9. Module (140) of a machine for processing (100) flat elements, **characterised in that** it comprises at least one transport device (1) according to any of the preceding claims.

10. Machine for processing (100) flat elements, **characterised in that** it comprises at least one transport device (1) according to any of claims 1 to 8.
